# EUROPEAN PATENT APPLICATION

(11) **EP 4 331 991 A1**
(43) Date of publication of application: **06.03.2024**
(21) Application number: 23194001.6
(22) Date of filing: 29.08.2023
(51) Int. Cl.: B64D 13/06

(54) **ENVIRONMENTAL CONTROL SYSTEM WITH LOW INLET PRESSURE**

(30) Priority: 29.08.2022 US 202263401848 P; 29.11.2022 US 202218071226
(71) Applicant: Hamilton Sundstrand Corporation, Charlotte, NC 28217-4578 (US)
(72) Inventor: VIGNALI, Mark G., Simsbury, CT, 06070 (US)
(74) Representative: Dehns

(57) **Abstract**

An environmental control system of a vehicle includes an inlet (22) for receiving a medium, an outlet (64) for delivering a conditioned form of the medium to a load, a primary heat exchanger (34) fluidly coupled to the inlet and a secondary heat exchanger (36). A thermodynamic device (40) is fluidly coupled to the primary heat exchanger and the secondary heat exchanger. A first bypass conduit (100) has a first bypass inlet (102) arranged upstream from the primary heat exchanger and a first bypass outlet (106) arranged upstream from the secondary heat exchanger. A first bypass valve (V5) is operable to control a flow of medium through the first bypass conduit. During operation in a first mode, the medium is configured to flow through the primary heat exchanger and the secondary heat exchanger in series. During operation in a second mode, the medium is configured to flow through the primary heat exchanger and the secondary heat exchanger in parallel.

## Description

### BACKGROUND

Embodiments of the disclosure relate to environmental control systems, and more specifically to an environmental control system (ECS) of an aircraft.

Aircraft need to have their internal environment controlled. In general, contemporary air conditioning systems are supplied a pressure at cruise that is approximately 30 psig to 35 psig. The trend in the aerospace industry today is towards systems with higher efficiency. One approach to improve efficiency of an aircraft environmental control system is to eliminate the bleed air entirely and use electrical power to compress outside air. A second approach is to use lower engine pressure and thus, pressure to the inlet of the ECS. The third approach is to use the energy in the cabin outflow air to compress outside air and bring it into the cabin. Each of these approaches provides a reduction in airplane fuel burn.

### SUMMARY

According to one aspect, an environmental control system of a vehicle includes an inlet for receiving a medium, an outlet for delivering a conditioned form of the medium to a load, a primary heat exchanger fluidly coupled to the inlet and a secondary heat exchanger. A thermodynamic device is fluidly coupled to the primary heat exchanger and the secondary heat exchanger. A first bypass conduit has a first bypass inlet arranged upstream from the primary heat exchanger and a first bypass outlet arranged upstream from the secondary heat exchanger. A first bypass valve is operable to control a flow of medium through the first bypass conduit. During operation in a first mode, the medium is configured to flow through the primary heat exchanger and the secondary heat exchanger in series. During operation in a second mode, the medium is configured to flow through the primary heat exchanger and the secondary heat exchanger in parallel.

In embodiments the first bypass outlet is arranged downstream from a portion of the thermodynamic device.

In embodiments the thermodynamic device further includes a compressor having a compressor outlet and a turbine operably coupled by a shaft. The first bypass outlet is arranged downstream from the compressor outlet.

In embodiments including a second bypass conduit having a second bypass inlet arranged upstream from the thermodynamic device and a second bypass outlet arranged directly upstream from the outlet. A second bypass valve is operable to control the flow of medium through the second bypass conduit.

In embodiments the second bypass inlet is arranged downstream from the primary heat exchanger.

In embodiments the first bypass valve and the second bypass valve are independently operable.

In embodiments the first bypass valve and the second bypass valve are operable in combination.

In embodiments the thermodynamic device includes a compressor having a compressor inlet and at least one turbine operably coupled by a shaft. The second bypass inlet is arranged upstream from the compressor inlet.

In embodiments the at least one turbine further includes a first turbine and a second turbine and the flow of medium provided to the second bypass conduit is configured to bypass the compressor, the first turbine and the second turbine.

In embodiments further including a ram air circuit including a ram air shell. The primary heat exchanger and the secondary heat exchanger are arranged within the ram air shell.

In embodiments the medium is bleed air.

In embodiments the vehicle is an aircraft.

According to another aspect, a method of operating an environmental control system of a vehicle includes supplying a medium to a primary heat exchanger and a secondary heat exchanger in series during a first mode of operation, and supplying a first portion of the medium to the primary heat exchanger and supplying a second portion of the medium to the secondary heat exchanger in parallel during a second mode of operation.

In embodiments supplying the second portion of the medium to the secondary heat exchanger further includes adjusting a position of a first bypass valve associated with a first bypass conduit such that the second portion of the medium is provided to the first bypass conduit.

In embodiments_supplying the second portion of the medium to the secondary heat exchanger further comprises bypassing a portion of a thermodynamic device.

In embodiments including directing at least part of the first portion of the medium into a second bypass conduit to bypass a thermodynamic device.

In embodiments the first portion of the medium is directed into the second bypass conduit downstream from the primary heat exchanger.

In embodiments the thermodynamic device includes a compressor and at least one turbine operably coupled by a shaft and the first portion of the medium bypasses the compressor and the at least one turbine.

In embodiments including directing at least part of the second portion of the medium to bypass a thermodynamic device.

In embodiments supplying the medium further comprises receiving bleed air from a bleed air system.

### BRIEF DESCRIPTION OF THE DRAWINGS

The following descriptions should not be considered limiting in any way. With reference to the accompanying drawing, like elements are numbered alike:
Fig. 1 is a schematic diagram of an environmental control system according to an embodiment; and
Fig. 2 is a schematic diagram of an environmental control system according to another embodiment.

### DETAILED DESCRIPTION

A detailed description of one or more embodiments of the disclosed apparatus and method are presented herein by way of exemplification and not limitation with reference to the Figure.

Embodiments herein provide an environmental control system of an aircraft that mixes mediums from different sources to power the environmental control system and to provide cabin pressurization and cooling at a high fuel burn efficiency. The medium can generally be air, while other examples include gases, liquids, fluidized solids, or slurries.

With reference now to the Figures, schematic diagrams of a portion of an environment control system (ECS) 20, such as an air conditioning unit or pack for example, are depicted according to non-limiting embodiments. Although the environmental control system 20 is described with reference to an aircraft, alternative applications are also within the scope of the disclosure. As shown in each of the FIGS., the ECS 20 has an inlet 22 configured to receive a medium A from a source 24. The environmental control system 20 is configured to deliver a conditioned form of the medium A to a load 26, such as a cabin for example. In embodiments where the ECS 20 is used in an aircraft application, the medium A may be bled air, which is pressurized air originating from i.e. being "bled" from, an engine or auxiliary power unit of the aircraft. It shall be understood that one or more of the temperature, humidity, and pressure of the bleed air provided via a bleed air system 24 can vary based upon the compressor stage and revolutions per minute of the engine or auxiliary power unit from which the air is drawn.

In other embodiments, the medium A provided to the inlet 22 may be fresh air, such as outside air for example. The outside air can be procured via one or more scooping mechanisms, such as an impact scoop or a flush scoop for example. In such embodiments, the fresh air as described herein is at an ambient pressure equal to an air pressure outside of the aircraft when the aircraft is on the ground and is between an ambient pressure and a cabin pressure when the aircraft is in flight. Alternatively, the medium A may be provided from the cabin of the aircraft In such embodiments the medium is cabin discharge air, which is air leaving the cabin and that would typically be discharged overboard. In yet another embodiment, the medium A is provided from a cabin air compressor located upstream from the inlet 22. It should be understood that a medium A including a mixture of any of the mediums described herein or a may be provided from another suitable source of the aircraft is also within the scope of the disclosure.

The ECS 20 includes a RAM air circuit 30 having a shell or duct, illustrated schematically in broken lines at 32, within which one or more heat exchangers are located. The ram air shell 32 can receive and direct a medium, such as ram air for example, through a portion of the ECS 20. The one or more heat exchangers are devices built for efficient heat transfer from one medium to another. Although the heat exchangers are illustrated as having a single pass configuration, it should be appreciated that in other embodiments, at least one of the mediums may make multiple passes through the heat exchanger. Further, the mediums may be arranged in any suitable flow configuration at the heat exchanger, such as cross-flow, parallel flow, counter-flow, or any combination thereof. Examples of the type of heat exchangers that may be used, include, but are not limited to, double pipe, shell and tube, plate, plate and shell, adiabatic shell, plate fin, pillow plate, and fluid heat exchangers.

The one or more heat exchangers arranged within the shell 32 may be referred to as ram heat exchangers. In the illustrated, non-limiting embodiment, the ram heat exchangers include a first or primary heat exchanger 34 and a second or secondary heat exchanger 36. Although two heat exchangers are illustrated, it should be understood that embodiments including a single heat exchanger, or alternatively, embodiments including more than two heat exchangers are also contemplated herein. Within the heat exchangers 34, 36, ram air, such as outside air for example, acts as a heat sink to cool the medium passing there through.

The ECS 20 additionally comprises at least one thermodynamic device 40. In the illustrated, non-limiting embodiments, the ECS 20 includes a single thermodynamic device 40; however, embodiments including additional thermodynamic devices are also within the scope of the disclosure. In the illustrated, non-limiting embodiment, the thermodynamic device 40 is a mechanical device that includes components for performing thermodynamic work on a medium (e.g., extracts work from or applies work to the medium A by raising and/or lowering pressure and/or by raising and/or lowering temperature). Examples of a thermodynamic device 40 include an air cycle machine, a two-wheel air cycle machine, a three-wheel air cycle machine, a four-wheel air cycle machine, etc. In the illustrated, non-limiting embodiment, the thermodynamic device 40 is a four-wheel air cycle machine.

The thermodynamic device 40 includes a compressor 42 and at least one turbine 44 operably coupled to each other via a shaft 46. The compressor 42 is a mechanical device that raises a pressure of a medium and can be driven by another mechanical device (e.g., a motor or a medium via a turbine). Examples of compressor types include centrifugal, diagonal or mixed-flow, axial-flow, reciprocating, ionic liquid piston, rotary screw, rotary vane, scroll, diaphragm, air bubble, etc. The turbine 44 is a mechanical device that expands a medium and extracts work therefrom (also referred to as extracting energy) to drive the compressor 42 via the shaft 46. In the illustrated, non-limiting embodiment, the thermodynamic device 40 includes a first turbine 44a and a second turbine 44b.

In an embodiment, the thermodynamic device 40 includes a fan 48 mounted to the shaft 46. The fan 48 is a mechanical device that can force via push or pull methods a medium (e.g., ram air) through the shell 32 across the one or more ram heat exchangers 34, 36 and at a variable cooling flow rate to control temperatures. As shown, the first turbine 44a and the second turbine 44b are operable independently or in combination, to drive the compressor 42 and the fan 48 via the shaft 46. Although the fan 48 is illustrated as being part of the four-wheel air cycle machine that forms the thermodynamic device 40, in other embodiments, the fan 48 may be separate from the thermodynamic device 40and driven by another suitable means. In such instances, the fan 48 may be electrically driven, may be a tip-turbine fan, or may be part of a separate simple cycle machine.

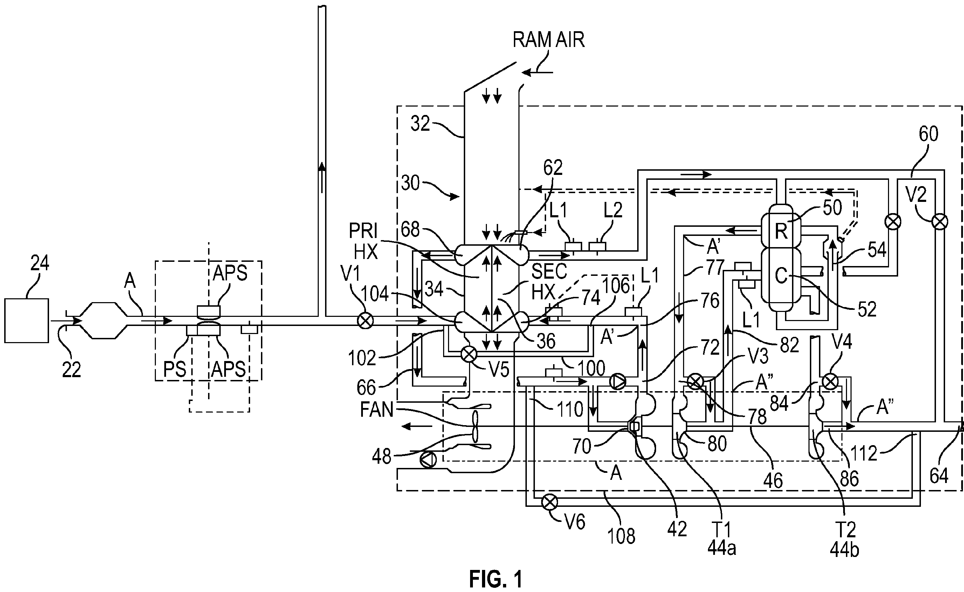

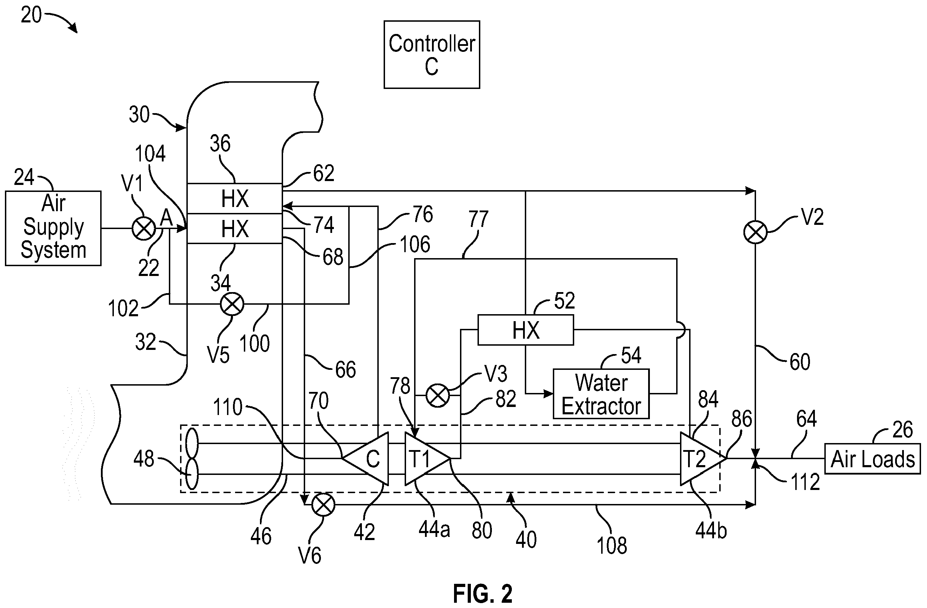

The ECS 20 may additionally include a dehumidification system. In the illustrated, non-limiting embodiment of FIG. 1, the dehumidification system includes a reheater 50, a condenser 52, and a water extractor or water collector 54 arranged in series relative to a flow of the medium A. The reheater 50 and condenser 52 are particular types of heat exchangers and the water collector 54 is a mechanical device that performs a process of removing water from a medium. In the non-limiting embodiment shown in the FIG., the reheater 50 is illustrated as a separate heat exchanger located downstream from and arranged in fluid communication with an outlet of the second heat exchanger 36. In combination, the reheater 50, the condenser 52, and/or the water extractor 54 may form a high-pressure water separator because the pressure of the medium provided thereto is at, or very close to its highest pressure within the ECS 20. Alternatively, in the non-limiting embodiment of FIG. 2, the functionality of the reheater and the condenser are integrated into a single heat exchanger represented at 52. It should be understood that an ECS 20 having at least one dehumidification system with any suitable configuration is also contemplated herein.

The elements of the ECS 20 are connected via valves, tubes, pipes, and the like. Valves (e.g., flow regulation device or mass flow valve) are devices that regulate, direct, and/or control a flow of a medium by opening, closing, or partially obstructing various passageways within the tubes, pipes, etc. of the system. Valves can be operated by actuators, such that flow rates of the medium in any portion of the ECS 20 can be regulated to a desired value. It should be appreciated that the valves may be operated independently or in combination to form a medium A having a desired temperature and pressure at the outlet 64. For instance, a first valve V1 may be operable to control the supply of the medium A to the ECS 20. In an embodiment, a second valve is arranged within a conduit 60 extending between an outlet 62 of the secondary heat exchanger 36 and the outlet 64 of the ECS 20 (or directly upstream therefrom) such that when the second valve V2 is open, at least a portion of the medium A output from the secondary heat exchanger 36 bypasses the turbines 44a, 44b and the dehumidification system.

In embodiments where the thermodynamic device 40 includes a plurality of turbines 44, the ECS 20 may include at least one valve to allow the medium A to bypass at least one of the turbines 44. For example, in the non-limiting embodiment of FIG. 2, the ECS 20 includes a valve V3 operable to divert the flow of medium A around the first turbine 44a. In the non-limiting embodiment of FIG. 1, the ECS 20 includes valves V3 and V4, operable to divert the flow of medium A around the first turbine 44a and the second turbine, respectively. Each of the valves of the ECS 20 is operably coupled to a controller C. The controller C may be configured to adjust a position of the one or more valves based on a temperature and pressure of the medium A provided to the inlet 22 and the temperature and pressure demands of the one or more loads 26.

With continued reference to FIGS. 1 and 2, operation of the ECS 20 in a first mode may be as associated with take-off, climb, or operation of the aircraft on the ground. During operation in the first mode, valve V1 is opened such that the medium A, such as bleed air for example, is provided to the inlet 22 from the source 24. As shown, the medium A is provided to the first or primary heat exchanger 34. Within the primary heat exchanger 34, the medium A is cooled via a flow of ram air, such as driven by the fan 48. At least one conduit 66 fluidly couples the outlet 68 of the primary heat exchanger 34 and the inlet 70 of the compressor 42. Accordingly, the cooled medium A flows from the primary heat exchanger 34 to the compressor 42 where the medium A is compressed. The act of compressing the medium A heats the medium A and/or increases the pressure of the medium A.

The outlet 72 of the compressor 42 is fluidly connected to an inlet 74 of the secondary heat exchanger 36 by at least one conduit 76. The compressed medium A' output from the compressor 42 is therefore provided to the secondary heat exchanger 36 where the compressed medium A' is again cooled via the flow of ram air. From the outlet of the 62 of the secondary heat exchanger 36, the compressed medium A' flows into conduit 60. Because valve V2 is closed during normal operation, the cool compressed medium A' is configured to flow to the dehumidification system.

With reference to FIG. 1, the cool compressed medium A' is configured to flow through the reheater 50, the condenser 52, and the water extractor 54 sequentially. The cool compressed medium A' is cooled and further cooled within the reheater 50 and the condenser 52, respectively, causing any moisture within the compressed medium A' to condense. This moisture is then removed from the flow of compressed medium A' within the water extractor 54. The resulting cool, dry compressed medium A' output from the water extractor 54 is configured to pass through the reheater 50 again. Within this second pass through the reheater 50, the cool, dry compressed medium A' output from the water extractor 54 is at least partially heated by the compressed medium A' output from the secondary heat exchanger 36 of the ram air circuit 30 to produce a warm, dry compressed medium A'.

Similarly, in the embodiment shown in FIG. 2, the cool compressed medium A' output from the secondary heat exchanger 36 is provided to the condenser 52 in which the cool compressed medium A' is further cooled causing moisture within the compressed medium A' to condense. The cool compressed medium A' is then provided to the water extractor 54 to remove the condensed moisture therefrom.

From the reheater 50 of the embodiment of FIG. 1, and the water extractor 54 of the embodiment illustrated in FIG. 2, the dry compressed medium A' is provided from the dehumidification system to the inlet 78 of the first turbine 44a via a passage 77. Within the first turbine 44a, work is extracted from the compressed medium A and is used to drive the compressor 42 and the fan 48. The outlet 80 of the first turbine 44a is arranged in fluid communication with the condenser 52 via a conduit 82. Accordingly, the cooled expanded medium A" output from the 80 outlet the first turbine 44a flows through passage 82 back to the condenser 52 where the expanded medium A" is heated. From the condenser 52, the heated expanded medium A" is provided to the inlet 84 of the second turbine 44b. Similar to the first turbine 44a, energy is extracted from the expanded medium A" and is used to drive both the compressor 42 and the fan 48. The temperature and/or the pressure of the expanded medium A" at the outlet 86 of the second turbine 44b is reduced compared to that of the expanded medium A" at the inlet 84. The expanded medium A" provided at the outlet of the second turbine 44b may be considered conditioned and suitable for delivery to one of more loads 26 via an outlet 64. It should be appreciated that the environmental control systems 20 illustrated and described herein are intended as an example only, and that an environmental control system having another configuration is also contemplated herein.

In the illustrated, non-limiting embodiments, each ECS 20 includes a first bypass conduit or passage 100 arranged in parallel with the primary heat exchanger 34 and the compressor 42. As shown, the first bypass conduit 100 has a first bypass inlet 102 arranged upstream from the inlet 104 of the primary heat exchanger 34 and a first bypass outlet 106 arranged downstream from the compressor outlet 72. A first bypass valve V5 is operable to control the flow of medium A into the first bypass conduit 100. In the illustrated, non-limiting embodiment, the valve V5 is located at a central portion of the first bypass conduit 100. In such embodiments, the valve V5 may be a simple valve transformable between an open and closed position. It should be understood that embodiments where the valve V5 is arranged another location, such as at either the first bypass inlet or outlet of the first bypass conduit 100 are also within the scope of the disclosure.

By positioning the valve V5 at the inlet end 102 of the first bypass conduit 100, the valve V5 may be controlled to direct the entire flow of medium A into the first bypass conduit 100. In such embodiments, the valve V5 may be a three way valve movable between a first position configured to direct all of the flow of the medium 1 to the primary heat exchanger 34, a second position configured to direct all of the flow of the medium A to the first bypass conduit 100, and a third position configured to direct a first portion of the flow of the medium A to the primary heat exchanger 34 and a second portion of the flow of the medium A to the first bypass conduit 100.

Alternatively, or in addition, the ECS 20 may include a second bypass conduit or passage 108 configured to bypass the remainder of the ECS 20 located downstream from the primary heat exchanger 34. As shown, the second bypass conduit 108 has a second bypass inlet 110 fluidly coupled to the conduit 66 at a location upstream from the inlet 70 of the compressor 42. A second bypass outlet 112 108 is located at or directly upstream from the outlet 64 of the ECS 20. A second bypass valve V6 is operable to control the flow of medium A into the second bypass conduit 108. In the illustrated, non-limiting embodiment, the valve V6 is located at a central portion of the second bypass conduit 108. In such embodiments, the valve V6 may be a simple valve transformable between an open and closed position. It should be understood that embodiments where the valve V6 is arranged another location, such as at the second bypass inlet 110 or second bypass outlet 112 of the second bypass conduit 108, are also within the scope of the disclosure.

Similar to valve V5 described above, by positioning the valve V6 at the inlet end 110 of the second bypass conduit 108, the valve V6 may be controlled to direct the entire flow of medium A into the second bypass conduit 108. In such embodiments, the valve V6 may be a three way valve movable between a first position configured to direct all of the flow of the medium A to the compressor 42, a second position configured to direct all of the flow of the medium A to the second bypass conduit 108, and a third position configured to direct a first portion of the flow of the medium A to the compressor 42 and a second portion of the flow of the medium A to the second bypass conduit 108.

During operation of the ECS 20 in the first mode, valves V5 and V6 are closed, such that the flow of medium A follows the flow path previously described. In this normal of first mode of operation, the medium A is provided to the primary and secondary heat exchangers 34, 36 in series. For the conditioned medium A provided to the outlet 64 to have adequate flow, the pressure of the medium A provided to the inlet 22 must be sufficient to overcome the pressure drop of both the heat exchangers 34, 36 as well as the pressure drop of all other components between the inlet 22 and the outlet 64. Accordingly, during the first mode of operation, the medium A may be provided from a high-pressure spool of an engine via a bleed air system.

In a second mode of operation, such as when the aircraft is at altitude or in a cruise condition, valve V5 is opened such that at least a portion medium A is configured to bypass the primary heat exchanger 34 and the compressor 42. In this partially open configuration, the medium A is provided to the primary heat exchanger 34 and the secondary heat exchanger 36 in parallel. Further, in an embodiment, valve V6 may be at least partially opened such that some or all of the medium A output from the primary heat exchanger 34 is directed into the second bypass conduit 108, thereby bypassing the remaining components of the ECS 20. Alternatively, or in addition, the valve V2 may be opened such that at least a portion of the medium A provided at the outlet 62 of the secondary heat exchanger 36 is configured to bypass the remaining component of the system via the conduit 60. The two flows of the medium A may then mix before being delivered to the one or more loads 26 via the outlet of the ECS 20. At least one of the valves V2 and V6 may be positioned such that a portion of the flow of medium A is provided to one or more components of the thermodynamic device 40, such as the compressor 42 and at least one turbine 44a, 44b. In an embodiment, the flow of medium A provided to the thermodynamic device 40 is the minimum amount required to operate the thermodynamic device 40 to avoid failure thereof and noise.

Because the medium A is only provided to a single heat exchanger of the ram air heat exchangers, and in some embodiments bypasses the other components of the ECS 20, during the second mode, the pressure drop of the medium A within the ECS 20 is reduced. As a result, the pressure of the medium A provided to the inlet 22 may be lowered. Accordingly, in an embodiment, the pressure of the medium A provided to the inlet 22 during operation in the second mode is less than the pressure of the medium A provided to the inlet during operation in the first mode. For example, the medium A may be provided from a low-pressure spool of an engine via the bleed air system during the second mode. It should be understood that the pressure of the air drawn from the low-pressure spool is less than the pressure of the air drawn from a high-pressure spool.

As previously noted, the environmental control system 20 illustrated and described herein is intended as an example only. It should be understood that any environmental control system having a primary and secondary heat exchanger 34, 36 may be adapted to include at least the first bypass conduit and a corresponding valve, to selectively provide the flow of a medium A to the primary and secondary heat exchangers 34, 36 in series and in parallel.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the claims. Therefore, it is intended that the present invention not be limited to the particular embodiment disclosed as the best mode contemplated for carrying out this present disclosure, but that the present invention will include all embodiments falling within the scope of the claims.

## Claims

1. An environmental control system of a vehicle comprising:
an inlet (22) for receiving a medium;
an outlet (64) for delivering a conditioned form of the medium to a load;
a primary heat exchanger (34) fluidly coupled to the inlet;
a secondary heat exchanger (36);
a thermodynamic device (40) fluidly coupled to both the primary heat exchanger and the secondary heat exchanger;
a first bypass conduit (100) having a first bypass inlet (102) and a first bypass outlet (106), the first bypass inlet being arranged upstream from the primary heat exchanger and the first bypass outlet arranged upstream from the secondary heat exchanger; and
a first bypass valve (V5) operable to control a flow of medium through the first bypass conduit;
wherein during operation of the environmental control system in a first mode, the medium is configured to flow through the primary heat exchanger and the secondary heat exchanger in series and during operation in a second mode, the medium is configured to flow through the primary heat exchanger and the secondary heat exchanger in parallel.

2. The environmental control system of claim 1, wherein the first bypass outlet is arranged downstream from a portion of the thermodynamic device.

3. The environmental control system of claim 2, wherein the thermodynamic device further comprises a compressor (42) having a compressor outlet (72) and a turbine (44) operably coupled by a shaft (46), and the first bypass outlet is arranged downstream from the compressor outlet.

4. The environmental control system of claim 1, 2 or 3, further comprising:
a second bypass conduit (108) having a second bypass inlet (110) (112) arranged upstream from the thermodynamic device and a second bypass outlet arranged directly upstream from the outlet; and
a second bypass valve (V6) operable to control the flow of medium through the second bypass conduit.

5. The environmental control system of claim 4, wherein the second bypass inlet is arranged downstream from the primary heat exchanger.

6. The environmental control system of claim 4, wherein the first bypass valve and the second bypass valve are independently operable or wherein the first bypass valve and the second bypass valve are operable in combination.

7. The environmental control system of claim 4, wherein the thermodynamic device further comprises a compressor (42) having a compressor inlet and at least one turbine (44) operably coupled by a shaft (46), and the second bypass inlet is arranged upstream from the compressor inlet, and optionally wherein the at least one turbine further comprises a first turbine (44a) and a second turbine (44b) and the flow of medium provided to the second bypass conduit is configured to bypass the compressor, the first turbine and the second turbine.

8. The environmental control system of any preceding claim, further comprising a ram air circuit (30) including a ram air shell (32), the primary heat exchanger and the secondary heat exchanger being arranged within the ram air shell.

9. The environmental control system of any preceding claim, wherein the medium is bleed air.

10. The environmental control system of any preceding claim, wherein the vehicle is an aircraft.

11. A method of operating an environmental control system of a vehicle further comprises:
supplying a medium to a primary heat exchanger (34) and a secondary heat exchanger (36) in series during a first mode of operation; and
supplying a first portion of the medium to the primary heat exchanger and supplying a second portion of the medium to the secondary heat exchanger in parallel during a second mode of operation.

12. The method of claim 11, wherein supplying the second portion of the medium to the secondary heat exchanger further comprises:
adjusting a position of a first bypass valve associated with a first bypass conduit such that the second portion of the medium is provided to the first bypass conduit.

13. The method of claim 11, wherein supplying the second portion of the medium to the secondary heat exchanger further comprises bypassing a portion of a thermodynamic device (40).

14. The method of claim 11, further comprising directing at least part of the first portion of the medium into a second bypass conduit (108) to bypass a thermodynamic device, and optionally wherein the first portion of the medium is directed into the second bypass conduit downstream from the primary heat exchanger., or wherein the thermodynamic device includes a compressor (42) and at least one turbine (44) operably coupled by a shaft (46), and the first portion of the medium bypasses the compressor and the at least one turbine.

15. The method of claim 11, further comprising directing at least part of the second portion of the medium to bypass a thermodynamic device.
